# EUROPEAN PATENT APPLICATION

(11) **EP 1 808 264 A1**
(43) Date of publication of application: **18.07.2007**
(21) Application number: 06100227.5
(22) Date of filing: 11.01.2006
(51) Int. Cl.: B23K 35/28, B23K 35/36

(54) **Brazing flux composition comprising a lubricant**

(71) Applicant: Akzo Nobel Coatings International B.V., 6824 BM Arnhem (NL)
(72) Inventor: Shaw, Peter, BB3 2JA, Darwen (GB)
(74) Representative: Schalkwijk, Pieter Cornelis

(57) **Abstract**

The invention relates to a composition comprising a flux or flux-producing compound, a resin, and a wax. The invention further relates to the use of such composition in the brazing of an aluminium comprising substrate. When a composition according to the present invention is used, it is not necessary to use an additional lubricant during deforming.

## Description

This invention relates to compositions comprising a flux, which compositions are sometimes referred to as 'flux compositions'. The invention further relates to the application of such compositions to aluminium comprising substrates, and the use of such compositions in the brazing of aluminium comprising substrates.

Aluminium comprising substrates, for example aluminium or aluminium alloy comprising sheets, are used to make shaped, or formed, products. In some of these processes parts of (shaped) aluminium comprising substrates are interconnected. One end of a substrate may be interconnected with the other end, or one substrate may be assembled with one or more other substrates. This is commonly done by brazing. In a brazing process, a brazing filler metal or brazing alloy, or a composition producing a brazing alloy upon heating, is applied to at least one portion of the substrate to be brazed. After the substrate parts are assembled, they are heated until the brazing metal or brazing alloy melts. The melting point of the brazing material is lower than the melting point of the aluminium comprising substrate(s).

In a brazing process it is necessary to at least provide the surface of one portion of the substrate to be brazed with a flux composition. A flux composition comprises a flux, or fluxing agent, for example an oxyfluoroaluminium, a hydroxyfluoroaluminium, a potassium fluoroaluminate, a fluoroborate, or a fluorozincate. The flux promotes the brazing connection between the aluminium comprising parts. The flux may facilitate the melting of the brazing material, e.g. by removing oxides from the surfaces to be joined, or by preventing the formation of oxides on the surface.

It is know, e.g. this is described in WO 00/64626 and WO 03/037559, to apply a flux composition as a coating to an aluminium or aluminium comprising substrate before such substrate is shaped or formed into a shaped product, and brazed at a later stage. This is advantageous since the flux composition can be applied as a coating to a sheet-type substrate

In WO 03/037559-A1 and WO 00/64626 flux compositions are described comprising a synthetic resin which mainly comprises a methacrylate homopolymer, a methacrylate copolymer or a olefin-acrylate copolymer. The flux compositions are applied to a sheet like aluminium or aluminium containing substrates, these substrates are shaped, and after the shaping the brazing takes place. However, to facilitate this shaping process it is generally required to use a lubricant, e.g. a lubricating oil. This lubricant has to be removed before or after the brazing process.

In US 6,497,770 flux compositions are described that contains a binder of an alkyd resin, a mixture of an acrylic resin and a butyl rubber (or a petroleum resin), and/or a polyethylene resin. It is stated that a product coated with a flux composition comprising a butyl rubber can be more easily subjected to plastic working after coating.

EP 1233345-A2 describes a process in which a surface of an aluminium member is coated with a resin; the aluminium member is subsequently deformed, and then joined with another resin-coated aluminium member. The resin is fused to join the aluminium members. In a preferred process, a resin having lubricating properties is used so that the deformation step of the aluminium substrate can be performed without using an additional lubricant. However, only few lubricating resins are mentioned (polyester resin, nylon resin, and vinylidene fluoride resin) and normally the bond formed between the aluminium members using a process as described in EP 1233345-A2 will be less strong than the bond formed in a metal brazing process.

The present invention relates to flux compositions that can be applied to sheet material for brazing, that can be shaped into various forms without the need to use an additional lubricant. The composition according to the present invention comprises a resin, a wax, and a flux and/or flux-producing compound.
Within the framework of the present invention, a wax is a naturally occurring or synthetic material that is solid at 20 °C. The melting point a wax normally is at least 40 °C, and at the melting temperature the material does not decompose. Waxes that are suitable for use in a composition according to the present invention may have a consistency at 20 °C ranging from soft and plastic to brittle and hard.

An advantage of a composition according to the present invention is that the flux composition of the present invention is self lubricating, in other words, the frictional properties are improved. Hence, an aluminium comprising substrate which is coated with a flux composition according to the present invention can be deformed without using an additional lubricant. The composition also works as an anti-blocking agent during the deformation. For example, the wax in the composition reduces or eliminates the problem of sticking of the flux composition to the deformation equipment. Further, the use of a flux composition according to the present invention reduces the wear on the deformation equipment. Additionally, a substrate coated with a flux composition according to the present invention does not need to be cleaned and dried after deforming.

Another advantage is the improved scratch and abrasion resistance of the substrate because the composition forms a protective layer, especially during deforming. An applied layer of the composition of the present invention has, optionally after drying, an improved resistance to damage compared to conventional flux compositions.

The composition according to the present invention is very suitable to be used in a controlled application process. It is relatively easy to obtain a uniform application of the composition of the invention. A uniformly applied flux composition is advantageous as it results in an improved flux distribution. An improved flux distribution is advantageous as it results in an improved joint quality, a reduced rejection rate, and reduced waste when the substrate is brazed.

The flux or flux-producing compound in a composition according to the present invention may be chloride comprising, and preferably comprises fluoride. Preferably the flux or flux-producing compound is solid at room temperature, more preferably it is added to the composition as a powder. The composition may comprise a mixture of one or more flux compounds and/or one or more flux-producing compounds.

As examples of fluoride comprising flux compounds the following compounds can be mentioned. Potassium fluoride (KF), aluminium fluoride (AlF₃), caesium fluoride (CsF), rubidium fluoride (RbF), lithium fluoride (LiF), sodium fluoride (NaF), and calcium fluoride (CaF₂). Potassium fluoroaluminates such as potassium tetrafluoroaluminate (KAlF₄), potassium pentafluoroaluminate (K₂AlF₅, K₂AlF₅.H₂O), and potassium hexafluoroaluminate (K₃AlF₆). Examples of such fluxes have been described in GB 1438955-A, US 4428920, US 3951328, US 5318764, and US 4579605. Oxyfluoroaluminum such as Al₂F₄O and AIFO. Hydroxyfluoroaluminium such as AlF₂(OH), AlF₂(OH).H₂O, and AIF(OH)₂. Fluoroborates such as potassium tetrafluoroborate (KBF₄) and sodium tetrafluoroborate (NaBF₄). Examples of such fluxes have been described in GB 899171-A, GB 1007039-A, and US 4235649. Fluorozincates such as potassium trifluorozincate (KZnF₃), potassium tetrafluorozincate (K₂ZnF₄), caesium trifluorozincate (CsZnF₃), and caesium tetrafluorozincate (Cs₂ZnF₄). Examples of such fluxes have been described in DE 19913111-A and WO 9948641-A. Alkali metal fluorosilicates such as caesium hexafluorosilicate (CS₂SiF₆), potassium hexafluorosilicate (K₂SiF₆), lithium hexafluorosilicate (Si₂SiF₆), rubidium hexafluorosilicate (Rb₂SiF₆), sodium hexafluorosilicate (Na₂SiF₆), and ammonium hexafluorosilicate ((NH₄)₂SiF₆). Examples of such fluxes have been described in US 5785770, DE 19636897-A, US 5985233, US 6019856-A, US 5980650, and WO 9810887-A. Alkali bimetal fluorosilicates such as potassium caesium hexafluorosilicate (KCsSiF₆), lithium caesium hexafluorosilicate (LiCsSiF₆), rubidium caesium hexafluorosilicate (RbCsSiF₆), rubidium potassium hexafluorosilicate (RbKSiF₆) and ammonium caesium hexafluorosilicate (NH₄CsSiF₆). Alkali metal bifluorosilicates (also referred to as alkali metal hydrofluorosilicates) such as caesium hydrofluorosilicate (CsHSiF₆), potassium hydrofluorosilicate (KHSiF₆), lithium hydrofluorosilicate (LiHSiF₆), and ammonium hydrofluorosilicate (NH₄HSiF₆). Caesiumfluoroaluminate complexes such as caesium fluoride (CsF), caesium hexafluoroaluminate (Cs₃AlF₆), caesium tetrafluoroaluminate (CsAlF₄, CsAlF₄.H₂O), and caesium pentafluoroaluminate (CsAlF₅, CsAlF₅.H₂O). Examples of such fluxes have been described in US 4670067, US 5171377, US 5806752, US 5771962, and US 4655385. So-called super-fluid fluxes can be used as well.

As examples of flux-producing compounds the following compounds and mixtures can be mentioned so-called reactive fluxes as described in WO 0138040-A. The composition may comprise fluxes based upon K₂SiF₆ or KZnF₃. This type of reactive fluxes can produce potassium fluoroaluminate, which acts as a flux material.

The composition of the present invention comprises at least one flux or flux-producing compound. It may comprise mixtures of the above-mentioned examples of flux and flux-producing compounds. In one embidiment potassium fluoroaluminate(s) or compound(s) producing potassium fluoroaluminates, or mixtures thereof, are used. As examples of commercially available potassium fluoroaluminate comprising flux materials can be mentioned: Nocolok^{®} and Nocolok Sil^{®} (ex Solvay Chemicals).

The composition according to the present invention comprises a resin. In one embodiment, this resin is a synthetic resin. In a further embodiment, the (synthetic) resin comprises as its main constituent, an acrylic acid ester, preperably a methacrylic acid ester. In a further embodiment the resin mainly comprises a methacrylate homopolymer or a methacrylate copolymer. It is also possible to use mixtures of such resins.
As examples of monomers that can be used to prepare such resin(s) can be mentioned: methyl methacrylate, ethyl methacrylate, propyl methacrylate, 2-methylpropyl methacrylate, n-butyl methacrylate, t-butyl methacrylate, 2-ethylhexyl methacrylate, octyl methacrylate, isodecyl methacrylate, lauryl methacrylate, tridecyl methacrylate, stearyl methacrylate, cyclohexyl methacrylate, benzyl methacrylate, diethylaminoethyl methacrylate, 2-hydroxyethyl methacrylate, dimethylaminoethyl methacrylate, t-butylaminoethyl methacrylate, glcidyl methacrylate, metatetrahydrofurfuryl methacrylate.
In a further embodiment the resin used in the present invention evaporates and/or decomposes during the brazing process, and can thus attain an excellent outward appearance of a brazed portion after brazing, without causing brazing insufficiency such as residual carbon.
In a further embodiment the resin is a synthetic resin comprising 90-100 wt% of an acrylic acid ester, for example the resin comprises 90-100 wt% polymethyl methacrylate.
Preferably the resin has a composition which volatilizes in the range of 175-400°C, and preferably below 350°C.

In one embodiment the wax in a composition according to the present invention is a wax that evaporates or decomposes during the brazing process, preferably preferably during heat-up in a brazing process, which takes place at a temperature above 450°C, and more typically takes place in the range of 500 to 640°C, more typically in the range of 560 to 620°C, when aluminium substrate is involved.

The composition according to the present invention comprises at least one wax. A single wax may be used, but it is also possible to use two or more waxes, for example a blend of two or more waxes. The wax may be modified or unmodified. Naturally occurring waxes, such as vegetable waxes or animal waxes, may be used. Additionally, or alternatively, synthetic waxes may be used.
In another embodiment the wax is a hydrocarbon wax, i.e. a wax consisting of carbon and hydrogen atoms and no or substantially no other atoms; the hydrocarbon wax preferably consists of more than 90%, even more preferably of more than 95% of carbon and hydrogen atoms.
In a further embodiment the wax is a polyolefin wax, i.e. a saturated hydrocarbon wax.
In a further embodiment mixtures of hydrocarbon waxes, (a) hydrocarbon wax(es) and (a) polyolefin wax(es) or mixtures of polyolefin waxes are used. and mixtures of hydrocarbon wax(es) and/or polyolefin wax(es) are preferred.

The brazing composition according to the present invention may further comprise a brazing material formed by a brazing metal or brazing alloy, or a composition producing a brazing alloy upon heating. In another embodiment, the brazing material forms an eutectic alloy or near-eutectic with aluminium upon brazing. For example, the brazing composition may comprise Si, for example Si-particles in powder form, Zn, Cu, or Ge. Other examples are alloys of metals (e.g. Si, Zn, Cu, Sn, Ge) with aluminium or with zinc. Zinc alloys being another frequently used filler metal for brazing. As examples of commercially availably alloys of Si with aluminium can be mentioned AA4047 and AA 4045 (ex Solvay Chemicals).

In one embodiment the brazing alloy is an Al-Si alloy having additions of Cu and/or Zn to substantially lower the melting point of the alloy, thereby allowing a brazing operation to be carried out at lower temperatures such as 520°C, 540°C or 560°C.

In another embodiments the brazing alloy is an Al-Si-Zn hypereutectic alloy, preferably composed of a powder or mixture of powders, each powder or mixture of powders consisting essentially of one or more of Al, Si or Zn, and wherein in the Al-Si-Zn hypereutectic alloy has a composition such that Si is in a range of 14 to 45 wt.% and the Zn is in a range of 5 to 30 wt.%.

In another embodiment a low-melting brazing alloy is used for brazing at a temperature in the range of 520 to 580oC. The brazing alloy comprises 0.001 to 3.0 wt.% of rare-earth element, 20 to 50 wt.% of Zn, 10 wt.% or less of Si, optionally 0.005 to 3.0 wt.% of Ti, and the balance Al and impurities. Ti as optionally present has an effect for preventing a solidification cracking of the brazed connection. All rare-earth elements or a mixture thereof may be employed. Among these elements, misch metal, La, Ce or Sm, which can be obtained at lower cost, are preferably used.

The composition may comprise one or more solvents. In one embodiment the composition comprises an organic solvent.
In a further embodiment a solvent having hydrophilic properties is used. In a further embodiment a solvent or mixture of solvents is used that has good polymer solvation and/or application properties. Examples of preferred solvents are 2-propanol, 1-propanol, ethylene glycol mono-ethyl ether, di-ethylene glycol mono-ethyl ether, tri-ethylene glycol mono-ethyl ether, ethylene glycol monobutyl ether, propylene glycol mono-ethyl ether, propylene glycol mono ethyl ether, propylene glycol ether, propylene glycol ester, butan-1-ol, 1-methyoxy-2-propanol, 4-hydroxy-4-methyl-pentan-2-one, and 1-methoxy-2-propylacetate.

Additives may be added to the composition according to the present invention. For example, an anti-oxidant, an anti-corrosive agent, an anti-foaming agent, a thickener, a plasticizer, a tackifier, a coupling agent, and the like may be added.
Additionally, mineral oils, paraffin oils, silicone fluids and/or polysiloxane compounds may be added, as these may influence the lubricating / slip properties of the composition.

The weight ratio of the flux and/or flux-producing compound(s) to the resin(s) normally is in the range of 1:2 to 6:1, preferably in the range of 1:2 to 3:1, and highly preferably in the range of 3:2 to 5:2, the weight ratio being calculated on the weight of these components in the uncured coating composition.
The ratio of the weight of the wax(es) to the combined weight of the flux and/or flux-producing compound(s) and of the resin(s) normally is in the range of 1:99 to 30:70, preferably in the range of 1:99 to 15:85, and highly preferably in the range of 2:98 to 10:90, the weight ratio being calculated on the weight of these components in the uncured coating composition.
In case one or more dispersion agents are present, the ratio of the weight of the dispersion agent(s) to the combined weight of the flux and/or flux-producing compound(s) and of the resin(s) and of the wax(es) normally is in the range of 0.2:99.8 to 10:90, preferably in the range of 0.3:99.7 to 4:96, and highly preferably in the range of 0.4:99.6 to 3:97.

In one embodiment, a composition is prepared that evaporates and/or decomposes during the brazing process in which process the brazing temperature is within the range of 500 to 700 °C. In a further embodiment the brazing temperature is within the range of 580 to 640 °C. In a further embodiment the brazing is performed in an inert atmosphere, e.g. an inert nitrogen atmosphere. Brazing may be performed in batch type furnaces or, more commonly, in continuous tunnel furnaces.

The composition according to the present invention can be applied to an aluminium comprising substrate. The composition may be applied by means of a roller coating, a spray method, immersion method, roll-transfer printing, or the like. In the case of an (organic) solvent containing composition, the solvent preferably is removed partially or completely from the composition after it has been applied to the substrate. For instance, the coating may be allowed to dry naturally or may be forced to dry. In a preferred embodiment, the applied composition is heated; more preferably, the applied composition is heated until the composition is dry, i.e. until the composition comprises less than 5 weight% of solvent, calculated on the total weight of the dried composition.
To improve the adhesion between the composition and the aluminium comprising substrate, the substrate may be cleaned or surface treated before the composition is applied. In one embodiment, the surface is degreased before the composition is applied. In a further embodiment, the surface of the substrate is etched using, e.g. an acid or any other etching medium, before the composition is applied.

The present invention further relates to a method in which a composition according to the present invention is used in the brazing of aluminium comprising substrates. A composition according to the present invention is applied to (parts of) aluminium comprising substrate(s); optionally one or more substrates are shaped; and brazing is performed. During the optional shaping / forming of substrates covered with a composition according to the present invention, it is not necessary to use an additional lubricant as the composition according to the present invention shows lubricating properties.

## Claims

1. A composition comprising a resin, a wax, and a flux and/or flux-producing compound.

2. A composition according to claim 1, **characterised in that** the flux and/or flux-producing compound comprises fluoride.

3. A composition according to claim 1 or 2, **characterised in that** the resin comprises an acrylic acid ester.

4. A composition according to any one of claims 1 to 3, **characterised in that** the composition comprises a hydrocarbon wax, a polyolefin wax and/or a mixture thereof.

5. A composition according to any one of claims 1 to 4, **characterised in that** the weight ratio of the flux and/or flux-producing compound to the resin is in the range of 1:2 to 6:1.

6. A composition according to any one of claims 1 to 5, **characterised in that** the composition further comprises a dispersion agent.

7. A composition according to any one of claims 1 to 5, **characterized in that** the composition further comprises a brazing material.

8. Use of a composition according to any one of claims 1 to 7 in the brazing of aluminium comprising substrates.
